# EUROPEAN PATENT APPLICATION

(11) **EP 1 986 469 A1**
(43) Date of publication of application: **29.10.2008**
(21) Application number: 07106832.4
(22) Date of filing: 24.04.2007
(51) Int. Cl.: H05B 33/08

(54) **Multi-colour illumination device and method for selecting and setting a desired colour of it**

(71) Applicant: FLOWIL INTERNATIONAL LIGHTING (HOLDING) B.V., 1097 JB Amsterdam (NL)
(72) Inventor: Hooker, James D., Birchgrove, Swansea, SA7 9NH (GB); Leunis, Jan, 5688 BW, Oirschot (NL)
(74) Representative: Zech, Stefan Markus

(57) **Abstract**

The invention relates to a multi-colour illumination device (1), comprising: a light source (2) for emitting light of at least two different colours, an electronic control circuit (3) for controlling the light source (2) to emit light of a specific colour, an electrical supply line (4) for supplying the illumination device (1) with electrical energy from an energy source (5) and a switch (6) arranged in the electrical supply for connecting or disconnecting the electrical illumination device (1) with or from the energy source (5). To facilitate the selection of a desired colour of the device the invention is characterized in that the electronic control circuit (3) is designed for running in a first and in a second, alternative operation mode, wherein the electronic control circuit (3) runs the light source (2) in the first operation mode to cycling through at least a part of the gamut of available colours and wherein the electronic control circuit (3) runs the light source (2) in the second operation mode to emit light of one specific colour, which was emitted by the light source (2) before the last disconnection from the energy source (5), wherein the electronic control circuit (3) switches back and forth between the two operation modes after each disconnection from the energy source (5). In an alternative embodiment of the invention the selection of a desired colour of the device (1) is characterized in that the electronic control circuit (3) runs the light source (2) in the first operation mode of displaying light of a first colour, and wherein the electronic control circuit (3) runs the light source (2) in the second operation mode to display light of a different colour, wherein the electronic control circuit (3) switches between a plurality of such operation modes after each disconnection from the energy source (5). Furthermore, the invention relates to a method for selecting and setting a desired colour of a multi-colour illumination device.

## Description

The invention relates to a multi-colour illumination device, comprising: a light source for emitting light of at least two different colours, an electronic control circuit for controlling the light source to emit light of a specific colour and an electrical supply line for supplying the illumination device with electrical energy from an energy source. Furthermore, the invention relates to a method for selecting and setting a desired colour of a multi-colour illumination device.

Illumination devices of this kind are used for multiple purposes. It is desired that they emit a light of a colour selected from a gamut of different colours which can be emitted by the device. Therefore, the user must select the desired colour by a suitable method.

With the pre-known devices it is a rather complex affair to select a desired colour, i. e. it is quite complex to program a variable colour light source to emit light of a desired colour. Typical systems call for specialised and expensive electronic control devices, with some means of communication between the controller and the light source. This communication requirement increases the complexity of the system and restricts the operation of pre-known devices to skilled individuals.

In a pre-known system the light source itself is equipped with a plurality of miniature switches, whose position may be adjusted to change the displayed light colour. In some applications the switches are arranged on the side of the light source. Therefore, it can be that the lamp must be removed from its fixture to change the colour. The user must look up the desired colour and the switch combination in the instruction manual. This is especially inconvenient when the colour of a large number of lamps must be changed. Here, it is detrimental that the user must establish physical contact with the array of switches on the light source to change its colour. This is a tedious operation, especially when the light sources are in a location that is difficult to reach, or when a plurality of sources must be re-programmed.

In another pre-known solution the light source must be disconnected and plugged into a programming unit. This communicates a signal via a supply terminal to change the colour held in memory. Here, the light source must be disconnected from the electricity supply in order to re-program it to emit a different light colour. This is an inconvenient task, especially when a large number of lamps must be re-programmed or when they are installed in inaccessible locations. Also here, the lamp must be removed from its fixture to change the colour. The user must look up the desired colour and enter its code into the control unit. This is also inconvenient when the colour of a large number of lamps must be changed.

In another pre-known solution the communication to change the light colour is effected by a remote controller, for instance via a radio frequency or infrared link. Although the remote control system is user friendly and can address a large number of light sources at once, its high price and complexity limits its acceptance by the consumer. In spite of the fact that this enables the user to re-program lamps without physical contact, it is detrimental that the costs for the system are quite high. Also, it is difficult to address individual lamps from a distance, depends on aim of the controller.

In a further pre-known device the light source is driven by a pre-programmed electronic controller, which continuously cycles through a defined series of colours in closed loop. The cycle of colour changing is fixed and cannot be adjusted or stopped by the user. Because this system is totally inflexible, such a light source is quite useless in the majority of applications, and has limited potential.

In yet another pre-known device each of the different colour sources within the light source are linked to a digital electronic controller via an Ethernet, mains signalling or other direct link, which permits total control of static and dynamic colour displays. Here, the great cost of the digital electronic controller together with the necessity for extra communication links between the light source and its controller makes the system complex and expensive. Indeed the average user is baffled by the unlimited choices, providing so many options that it is difficult to quickly achieve the desired result. It is thus suited only to the most professional installations. Thus, the system is totally flexible and all individual colour LED chips can be individually addressed; consequently it is a perfect solution for the most professional applications, e. g. studios and theatres. Due to the high costs and the complexity of the system it is not applicable for average users.

WO 03/096761 A1 proposes an illumination apparatus with LEDs as a light source and a controller coupled to the LEDs and configured to receive a power-related signal from an AC power source that provides signals other than a standard AC line voltage. Here, the controller is further configured to provide power to the LED based on the power-related signal. With this concept a dimming function can be established. Furthermore, more parameters relating to the light generated by the LED-based light source, e. g. the colour, can be conveniently controlled via operation of a conventional AC dimmer.

DE 196 02 252 A1 suggests a multi-colour light source with a plurality of lamps emitting different colours. The suggested device has a control unit by which electrical energy can be supplied to the lamps, wherein the control unit selects one or more of the lamps by actuating of different on/off-switches.

Consequently, there exist no simple and user-friendly means of programming the colour of a variable colour light source, which is suited to the needs of the basic and semi-professional users.

It is therefore an object of the present invention to de-skill and simplify the act of setting the colour of a variable colour light source. Here, both the controller and the communication means are to be simplified compared with pre-known solutions. It should become possible to select the desired colour of the light source without any special wiring, controllers or communication links between the light source and its controller.

The solution of this object according to the invention is characterized in that the electronic control circuit is designed for running in a first and in a second, alternative operation mode, wherein the electronic control circuit runs the light source in the first operation mode to cycling through at least a part of the gamut, preferably through the whole gamut, of available colours and wherein the electronic control circuit runs the light source in the second operation mode to emit light of one specific colour, which was emitted by the light source before the last disconnection from the energy source took place, wherein the electronic control circuit switches back and forth between the two operation modes after each disconnection from the energy source.

An alternative solution of this object according to the invention is characterized in that the electronic control circuit is designed for operation in a plurality of fixed operation modes. Upon the first connection of said device to the energy source, light of one colour is displayed. The colour may be changed simply by momentarily interrupting and restoring the energy source, whereupon a different colour of light will be displayed. A subsequent interruption of the energy source will lead to yet another different colour of light being displayed. Numerous switching operations may thus be employed to choose between a number of pre-programmed light colours.

The electronic control circuit has preferably memory means for storing a status of the light source for emitting a light of a specific colour.

According to a first embodiment of the invention the light source is an array of at least two LEDs. More specifically, the light source can be an array of three different kinds of LEDs, emitting light of different colours. The LEDs can be designed for emitting light in the colours red, green and blue. They can be mounted on a circuit board. Furthermore, the electronic control circuit can be mounted on a power supply module.

In an alternative embodiment of the invention the light source is formed by at least two fluorescent discharge tubes. The at least two fluorescent discharge tubes can be designed for emitting light of different colours or different colour temperatures of light. One of the fluorescent discharge tubes can have a low colour temperature of around 3,000 K or less. One of the fluorescent discharge tubes can have a high colour temperature of around 4,000 K or higher.

The colour temperature essentially refers to a particular colour content or shade (e. g. reddish, bluish) of white light. The colour temperature of a given radiation sample conventionally is characterized according to the temperature in degrees Kelvin (K) of a black body radiator that radiated essentially the same spectrum as the radiation sample in question. The colour temperature of white light generally falls within a range of from approximately 700 K (generally considered the first visible to the human eye) to over 10,000 K.

The fluorescent discharge tubes can be mounted on an intermediate mechanical assembly. This intermediate mechanical assembly can be connected to a power supply module or ballast.

The electrical and mechanical contact of the device can be effected by a cap. The cap is preferably designed to be inserted into a standardized electrical socket.

The light source and the electronic control circuit can be integrated in an enclosure.

The method for selecting and setting a desired colour of a multi-colour illumination device, wherein the illumination device has a light source for emitting light of at least two different colours, an electronic control circuit for controlling the light source to emit light of a specific colour, an electrical supply line for supplying the illumination device with electrical energy from a energy source and a switch arranged in the electrical supply for connecting or disconnecting the electrical illumination device with or from the energy source, is characterized in that the method comprises the following steps:
a) switching on the supply of electrical energy to the illumination device by actuating the switch, thereby causing the electronic control circuit to run a continuous colour cycling mode in which the electronic control circuit controls the light source to cycling through at least a part of the gamut of available colours;
b) after light of a desired colour is emitted by the light source: switching off the supply of electrical energy to the illumination device by actuating the switch;
c) switching on the supply of electrical energy to the illumination device again by actuating the switch, thereby causing the electronic control circuit to run a constant colour mode in which the electronic control circuit controls the light source to emit light of the colour which was emitted during above process step b).

An alternative method for selecting and setting a desired colour of a multi-colour illumination device wherein the illumination device has a light source for emitting light of at least two different colours, an electronic control circuit for controlling the light source to emit light of a specific colour, an electrical supply line for supplying the illumination device with electrical energy from a energy source and a switch arranged in the electrical supply for connecting or disconnecting the electrical illumination device with or from the energy source, comprises the following steps:
a) switching on the supply of electrical energy to the illumination device by actuating the switch, thereby causing the electronic control circuit to enter a first operation mode in which the electronic control circuit controls the light source to display light of a first colour;
b) to change the light source to display light of a different colour: switching off the supply of electrical energy to the illumination device by actuating the switch;
c) switching on the supply of electrical energy to the illumination device again by actuating the switch, thereby causing the electronic control circuit to enter a second operation mode in and to control the light source to display light of a second and different colour.

Preferably, the above methods continue with mentioned step a) after the electrical energy is switched off after carrying out step c).

With the suggested solution the act of setting the colour of a variable colour light source is greatly simplified. The operation is de-skilled and may be performed by uneducated users.

Another advantage is that the controller is greatly simplified and can be integrated within the luminaire or light source, reducing the requirement for cabling between the light source and the controller.

An inherent advantage is that only a simple on/off switch is needed to operate the controller.

A further advantage is that physical contact does not have to be made with the light source or controller to change the light colour.

Still another advantage is that no additional communication means - either wired or wireless - are required to the controller of the light source.

Yet another advantage is that a plurality of light sources, which having their own controller and wired on the same main circuit, may be controlled synchronously and simultaneously by a single switch controlling the whole group.

Finally, it is beneficial that the cost and complexity of the suggested system is greatly simplified compared with pre-known solutions.

In the drawings embodiments of the invention are depicted.
- FIG 1: shows a cross sectional view of a multi-colour illumination device according to a first embodiment of the invention and
- FIG 2: shows an alternative embodiment of the multi-colour illumination device.

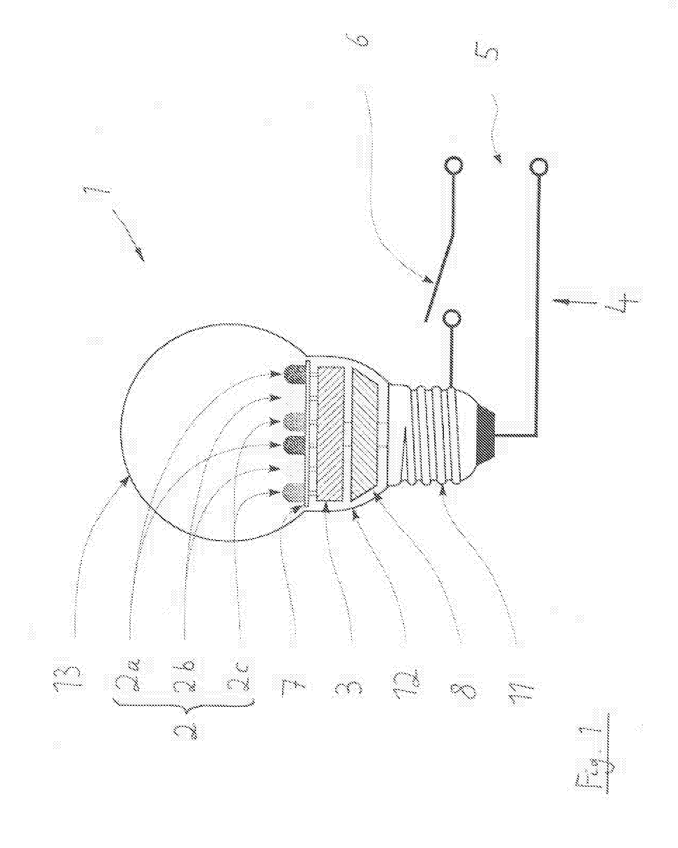

FIG 1 shows a multi-colour illumination device 1 according to a preferred embodiment of the invention.

In general the multi-colour illumination device 1 having a light source 2 is connected via an electrical supply line 4 to an energy source 5 in a well known manner, wherein a switch 6 is arranged in the supply line 4.

The device 1 comprises an outer enclosure 12, at least a part 13 of which must be light transmitting or open either partially or entirely, so as to allow the transmission of light. A light source 2 is disposed within the enclosure 12 and consists of an array of LEDs 2a, 2b, 2c having at least two different wavelengths of light emission.

Preferably there will be three different colours of LEDs, emitting in the red (2a), green (2b) and blue (2c) wavelengths.

LEDs of common wavelength may be electrically connected such that they operate simultaneously. In the depicted embodiment two LEDs of each kind are employed.

The LEDs 2a, 2b, 2c are mounted on a circuit board 7. The enclosure 12 also contains an intelligent electronic control circuit 3 which performs the function of the above explained selection of a desired colour.

Also included is a suitable power supply module 8. Electrical and mechanical contact is effected via a cap 11 of traditional form to permit the installation in an electric lighting fixture.

The device 1 is controlled by a simple single pole single throw switch 6 connected in series between the device 1 and the electric energy source 5. The connection between the energy source 5 and the illumination device 1 is established by an electrical supply line 4, in which the switch 6 is mounted in a well known manner.

The lamp needs not to be restricted to the spherical form as illustrated in FIG 1. Also for instance a reflector shaped lamp is possible.

The invention applies equally well to an entire luminaire which contains a number of different colour LED sources. Furthermore, the electronic control circuit (controller) 3 and the power supply module 8 do not have to be integrated within the enclosure 12, but may be contiguously juxtaposed or even mounted remotely.

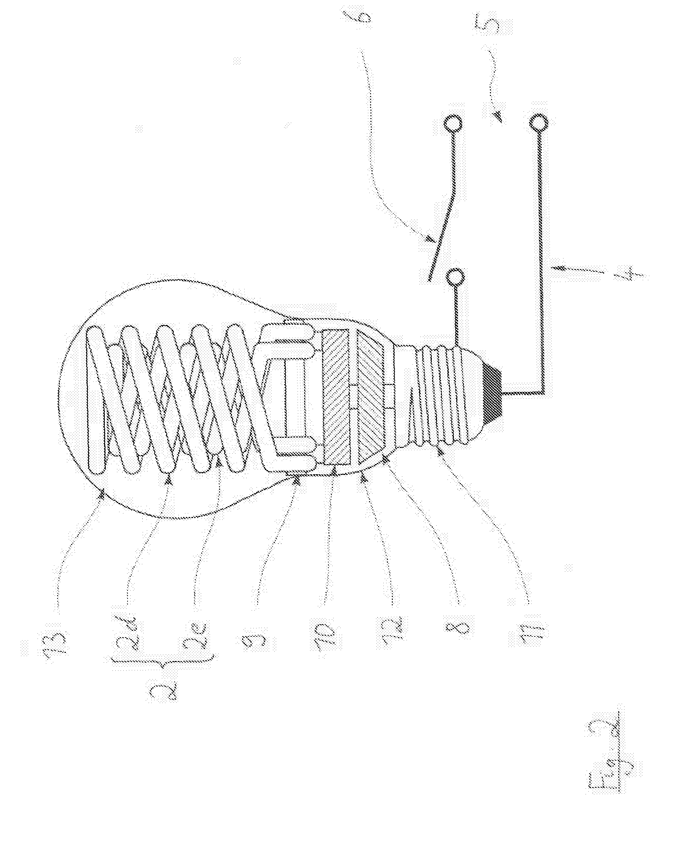

FIG 2 shows an alternative embodiment of a multi-colour illumination device 1.

Here the light source 2 is established by two fluorescent discharge tubes 2d and 2e of different colours. They are disposed within the enclosure 12. Each tube 2d, 2e emitting a different colour or colour temperature of light.

Preferably one tube 2d will have a low colour temperature of around 3,000 K or less, while the second tube 2e has a high colour temperature of around 4,000 K or higher.

The fluorescent tubes 2d, 2e are mounted in or on an intermediate mechanical assembly 9. The enclosure 12 also contains a suitable power supply module or ballast 10.

With the suggested solution a simplified colour control system is proposed which consists of an elementary program in conjunction with a memory function. Said controller may be used remotely or integrated within a luminaire or even integrated within the light source itself.

With regard to the proposed method of selecting a desired colour one of the following two procedures is carried out:

### Procedure 1:

Upon connection to the electricity supply 5 the system commences operation in a mode of cycling through the gamut of available colours which the light source 2 is able to emit. This operation mode is called here the first operation mode or continuous colour cycling mode.

When the desired colour is displayed, the user momentarily interrupts the electricity supply to the device 1 be actuating the switch 6.

Upon re-application of power, i. e. after actuating again the switch 6, the device 1 changes into a second mode of operation, in which the previously displayed colour is held constant. This operation mode is called here the second operation mode or constant colour mode.

Should the user subsequently become desirous of an alternative colour, he must simply repeat said switching action, whereupon the system will once again enter the colour cycling mode. Yet another switching action at the appropriate moment will fix the output of the light source 2 at a new colour.

Consequently, a system for colour control of a light source 2 is suggested wherein an elementary program and memory function are combined to result in the dual modes of continuous colour cycling and maintaining a constant colour, and where the mode is changed simply by interrupting the electricity supply to select a new light emission colour.

### Procedure 2:

Upon connection to the electricity supply 5 the system displays light of one colour. This operation mode is called here the first operation mode.

Should the user be desirous of an alternative colour, he must momentarily interrupt the electricity supply to the device 1 by actuating the switch 6.

Upon re-application of power, i.e. after actuating again the switch 6, the device 1 changes into a second mode of operation, in which light of a different colour is displayed.

Should the user be desirous of another alternative colour, he must simply repeat said switching action, whereupon the device enters a third mode of operation, in which light of another different colour is displayed.

Yet more switching operations will cause the device to enter a fourth, fifth, sixth mode of operation, and so on, each mode of operation displaying light of a different colour.

It is not stipulated that these modes of operation must necessarily be static colours. Indeed further modes of operation might cause the light to flash, or display a pattern of changing colours.

Consequently, as system for colour control of a light source 2 is suggested wherein an elementary program and memory function are combined to result in a plurality of modes of operation to display light of different colours, and where the mode is changed simply by interrupting the electricity supply to select a new light emission colour.

### Reference Numerals

- 1: Multi-colour illumination device
- 2: Light source
- 2a: LED (red)
- 2b: LED (green)
- 2c: LED (blue)
- 2d: Fluorescent discharge tube
- 2e: Fluorescent discharge tube
- 3: Electronic control circuit
- 4: Electrical supply line
- 5: Energy source
- 6: Switch
- 7: Circuit board
- 8: Power supply module
- 9: Intermediate mechanical assembly
- 10: Power supply module / Ballast
- 11: Cap
- 12: Enclosure
- 13: Light transmitting part

## Claims

1. Multi-colour illumination device (1), comprising:
- a light source (2) for emitting light of at least two different colours,
- an electronic control circuit (3) for controlling the light source (2) to emit light of a specific colour and
- an electrical supply line (4) for supplying the illumination device (1) with electrical energy from an energy source (5),
**characterized in that**
the electronic control circuit (3) is designed for running in a first and in a second, alternative operation mode,
wherein the electronic control circuit (3) runs the light source (2) in the first operation mode to cycling through at least a part of the gamut of available colours and
wherein the electronic control circuit (3) runs the light source (2) in the second operation mode to emit light of one specific colour, which was emitted by the light source (2) before the last disconnection from the energy source (5) took place, wherein the electronic control circuit (3) switches back and forth between the two operation modes after each disconnection from the energy source (5).

2. Multi-colour illumination device (1), comprising:
- a light source (2) for emitting light of at least two different colours,
- an electronic control circuit (3) for controlling the light source (2) to emit light of a specific colour and
- an electrical supply line (4) for supplying the illumination device (1) with electrical energy from an energy source (5),
**characterized in that**
the electronic circuit (3) is designed for running in a plurality of fixed operation modes,
wherein the electronic control circuit (3) runs the light source (2) in the first operation mode to display light of a first colour and
wherein the electronic control circuit (3) runs the light source (2) in the second operation mode to display light of a second colour and
wherein the electronic control circuit (3) runs the light source (2) in additional operation modes to display light of another different colour and wherein the electronic control circuit (3) switches between the different operation modes after each disconnection from the energy source (5).

3. Multi-colour illumination device according to claim 1 or 2, **characterized in that** the electronic control circuit (3) has memory means for storing a status of the light source (2) for emitting a light of a specific colour.

4. Multi-colour illumination device according to any of claims 1 to 3, **characterized in that** the light source (2) is an array of at least two LEDs (2a, 2b, 2c).

5. Multi-colour illumination device according to claim 4, **characterized in that** the light source (2) is an array of three different kinds of LEDs (2a, 2b, 2c), emitting light of different colours.

6. Multi-colour illumination device according to claim 5, **characterized in that** the LEDs (2a, 2b, 2c) emitting light in the colours red, green and blue.

7. Multi-colour illumination device according to at least one of claims 4 to 6, **characterized in that** the LEDs (2a, 2b, 2c) are mounted on a circuit board (7).

8. Multi-colour illumination device according to at least one of claims 4 to 7, **characterized in that** the electronic control circuit (3) is mounted on a power supply module (8).

9. Multi-colour illumination device according to any of claims 1 to 3, **characterized in that** the light source (2) is formed by at least two fluorescent discharge tubes (2d, 2e).

10. Multi-colour illumination device according to claim 9, **characterized in that** the at least two fluorescent discharge tubes (2d, 2e) emitting light of different colours or different colour temperatures of light.

11. Multi-colour illumination device according to claim 10, **characterized in that** one of the fluorescent discharge tubes (2d, 2e) has a low colour temperature of around 3,000 K or less.

12. Multi-colour illumination device according to claim 10 or 11, **characterized in that** one of the fluorescent discharge tubes (2d, 2e) has a high colour temperature of around 4,000 K or higher.

13. Multi-colour illumination device according to at least one of claims 9 to 12, **characterized in that** the fluorescent discharge tubes (2d, 2e) are mounted on an intermediate mechanical assembly (9).

14. Multi-colour illumination device according to claim 13, **characterized in that** the intermediate mechanical assembly (9) is connected to a power supply module or ballast (10).

15. Multi-colour illumination device according to at least one of claims 1 to 14, **characterized in that** the electrical and mechanical contact of the device is effected by a cap (11).

16. Multi-colour illumination device according to claim 15, **characterized in that** the cap (11) or the fixtures are designed to be inserted into a corresponding standardized electrical socket.

17. Multi-colour illumination device according to at least one of claims 1 to 16, **characterized in that** the light source (2) and the electronic control circuit (3) are integrated in an enclosure (12).

18. Method for selecting and setting a desired colour of a multi-colour illumination device (1), wherein the illumination device (1) has a light source (2) for emitting light of at least two different colours, an electronic control circuit (3) for controlling the light source (2) to emit light of a specific colour, an electrical supply line (4) for supplying the illumination device (1) with electrical energy from a energy source (5) and a switch (6) arranged in the electrical supply for connecting or disconnecting the electrical illumination device (1) with or from the energy source (5),
**characterized in that**
the method comprises the steps:
a) switching on the supply of electrical energy to the illumination device (1) by actuating the switch (6), thereby causing the electronic control circuit (3) to run a continuous colour cycling mode in which the electronic control circuit (3) controls the light source (2) to cycling through at least a part of the gamut of available colours;
b) after light of a desired colour is emitted by the light source (2): switching off the supply of electrical energy to the illumination device (1) by actuating the switch (6);
c) switching on the supply of electrical energy to the illumination device (1) again by actuating the switch (6), thereby causing the electronic control circuit (3) to run a constant colour mode in which the electronic control circuit (3) controls the light source (2) to emit light of the colour which was emitted during above process step b).

19. Method for selecting and setting a desired colour of a multi-colour illumination device (1), wherein the illumination device (1) has a light source (2) for emitting light of at least two different colours, an electronic control circuit (3) for controlling the light source (2) to emit light of a specific colour, an electrical supply line (4) for supplying the illumination device (1) with electrical energy from a energy source (5) and a switch (6) arranged in the electrical supply for connecting or disconnecting the electrical illumination device (1) with or from the energy source (5),
**characterized in that**
the method comprises the steps:
a) switching on the supply of electrical energy to the illumination device (1) by actuating the switch (6), thereby causing the electronic control circuit (3) to enter a first operation mode in which the electronic control circuit (3) controls the light source (2) to display light of a first colour;
b) to change the light source (2) to display light of a different colour: switching off the supply of electrical energy to the illumination device (1) by actuating the switch (6);
c) switching on the supply of electrical energy to the illumination device (1) again by actuating the switch (6), thereby causing the electronic control circuit (3) to enter a second operation mode in and to control the light source (2) to display light of a second and different colour.

20. Method according to claim 18 or 19, **characterized in that** it continues with step a) of claim 18 or 19 after the electrical energy is switched off after carrying out step c) of claim 18 or 19.
